# DEMANDE DE BREVET EUROPEEN

(11) **EP 1 241 370 A1**
(43) Date de publication de la demande: **18.09.2002**
(21) Numéro de dépôt: 02290620.0
(22) Date de dépôt: 12.03.2002
(51) Int. Cl.: F16D 65/22

(54) **Dispositif d'écartement de machoires intérieures d'un frein à tambour et frein équipé d'un tel dispositif**

(30) Priorité: 13.03.2001 FR 0103398
(71) Demandeur: SA Thibault Essieux RTN, 49490 Noyant (FR)
(72) Inventeur: Thibault, Alain, 49150 Anvin (FR)
(74) Mandataire: Laget, Jean-Loup

(57) **Abrégé**

La présente invention concerne un dispositif d'écartement des mâchoires (1) intérieures d'un frein à tambour du type constitué d'au moins deux leviers (2, 3) articulés entre eux et sollicités au moment du freinage par un organe de traction, tel qu'un câble ou une tige de traction, l'un (3) des leviers (2, 3) présentant, à l'extrémité opposée de son point (P) d'appui sur une mâchoire (1) et de son point (5) d'articulation, un crochet (6) ouvert.

Ce dispositif est caractérisé en ce que l'ouverture du crochet (6) est munie d'un organe élastique (8) s'étendant au-delà de l'extrémité libre du crochet (6) pour former avec la paroi extérieure du crochet (6) un guide d'entrée pour une attache (11) en forme de boucle disposée à l'extrémité de l'organe de traction.

Application : frein à tambour pour remorque.

## Description

La présente invention concerne un dispositif d'écartement des mâchoires intérieures d'un frein à tambour fonctionnant notamment par inertie, un frein équipé d'un tel dispositif d'écartement ainsi qu'un câble de traction destiné à coopérer avec un tel dispositif.

Les freins à tambour dont les mâchoires, rappelées en position rapprochées par ressort, sont susceptibles d'être écartées par un dispositif d'écartement sollicité par un câble de traction sont bien connus à ceux versés dans cet art. Le dispositif d'écartement des mâchoires est généralement constitué d'au moins deux leviers articulés entre eux et venant respectivement en appui sur les mâchoires de frein. L'un des leviers présente, à l'extrémité opposée de son point d'appui et de son point d'articulation, un crochet ouvert. L'accession à ce crochet peut s'effectuer à travers une ouverture ménagée dans le flasque de frein. Le câble de traction est donc destiné à agir sur ce crochet. Dans l'état de la technique connu du demandeur et tel qu'illustré notamment dans le brevet européen EP-0.127.759 et le brevet allemand DE-2.410.026, le crochet du dispositif d'écartement est équipé de manière permanente d'un dispositif d'attache faisant saillie à travers l'ouverture du flasque de frein et sur lequel vient se fixer, au moyen par exemple d'une olive, le câble de frein. L'avantage d'un tel dispositif réside dans le fait que la zone de liaison du câble au dispositif d'écartement est extérieure au tambour de frein et par conséquent aisément accessible à l'opérateur. Par contre, ce dispositif de liaison entre dispositif d'écartement et câble est onéreux, car il nécessite, parallèlement à une adaptation de l'extrémité du câble, la conception d'une pièce d'attache complexe comme l'illustrent les brevets précités.

On connaît par ailleurs des dispositifs d'écartement des mâchoires intérieures d'un frein à tambour dont la conception permet un montage en aveugle du câble de traction directement sur le dispositif d'écartement. Une telle solution est notamment décrite dans le document allemand DE-A-4.307.861. Ce document décrit en effet un dispositif d'écartement des mâchoires intérieures d'un frein à tambour du type constitué d'au moins deux leviers, l'un des leviers étant muni d'un crochet ouvert destiné à recevoir une attache en forme de boucle disposée à l'extrémité d'un câble de traction. Ce dispositif d'écartement présente un guide constitué par une lame ressort (26) montée sur le levier exempt de crochet, cette lame ressort permettant d'enfiler directement l'attache du câble sur le crochet à levier par l'intermédiaire d'un montage en aval. Toutefois, on constate, du fait de la disposition de la lame ressort sur le levier exempt de crochet, que cette lame remplit uniquement une fonction de guidage à l'introduction de l'attache du câble sur le crochet du levier à crochet. Elle ne permet pas de garantir, au cours de l'utilisation du dispositif d'écartement, notamment par traction sur le câble, un maintien du câble enfilé dans le crochet. Il en est de même lors des opérations de maintenance qui amènent à un relâchement du câble susceptible de se décrocher alors du crochet du levier. Un tel dispositif est donc susceptible de manquer de fiabilité.

Le brevet US-A-5.311.793 décrit de manière analogue un dispositif d'écartement des mâchoires intérieures d'un frein à tambour du type constitué d'au moins deux leviers, l'un des leviers étant muni d'un crochet ouvert destiné à recevoir l'extrémité d'un câble pourvu d'une olive sertie. Du fait de la conception de l'extrémité du câble pourvue d'une olive, il en résulte l'obligation de disposer d'un levier à crochet à deux branches parallèles immobilisant axialement dans une direction l'olive du câble. Un tel système de coopération entre crochet et extrémité du câble limite les risques d'un détachement intempestif du câble du crochet mais nécessite de rendre plus complexe la conception du levier à crochet en obligeant à une conception à deux branches parallèles du levier à crochet. Il en résulte un encombrement accru du dispositif d'écartement. On constate également dans ce dispositif le positionnement d'une lame ressort en forme d'épingle à cheveux sur le levier exempt de crochet. Cette lame sert à nouveau de guidage à l'extrémité du câble pourvue d'une olive. Du fait de la conception de l'extrémité du câble, les risques de décrochement du câble du crochet sont réduits mais l'encombrement du dispositif d'écartement est important et la conception du levier à crochet complexe. Il en résulte également la création d'un organe élastique complexe.

Un but de la présente invention est donc de proposer un dispositif d'écartement de mâchoires intérieures d'un frein à tambour dont la conception permet un montage en aveugle du câble de traction enfilé directement sur un levier à crochet du dispositif d'écartement de manière à supprimer toute pièce intermédiaire et à réduire l'encombrement de la liaison sans nuire à la fiabilité de l'ensemble.

Un autre but de la présente invention est de proposer un dispositif d'écartement de mâchoires intérieures d'un frein à tambour dont la conception permet de garantir un montage rapide et fiable du câble sur le dispositif sans risque d'éviction du câble enfilé sur le levier à crochet du dispositif.

Un autre but de la présente invention est de proposer un frein muni d'un tel dispositif d'écartement dont la conception est simplifiée.

Un autre but de la présente invention est encore de proposer un câble de traction dont la conception de l'extrémité permet une liaison directe avec le crochet d'un dispositif d'écartement de mâchoires du type précité.

A cet effet, l'invention a pour objet un dispositif d'écartement des mâchoires intérieures d'un frein à tambour fonctionnant notamment par inertie, du type constitué d'au moins deux leviers articulés entre eux et sollicités au moment du freinage par un organe de traction tel qu'un câble ou une tige, lesdits leviers présentant chacun au moins un point d'appui sur les mâchoires de frein rappelées en position rapprochée par ressort(s), l'un des leviers présentant, à l'extrémité opposée de son point d'appui et de son point d'articulation, un crochet ouvert, caractérisé en ce que l'ouverture du crochet est munie d'un organe élastique, tel qu'une lame ressort, solidaire du levier à crochet, cet organe élastique s'étendant au-delà de l'extrémité libre du crochet pour former avec la paroi extérieure du crochet un guide d'entrée pour une attache en forme de boucle disposée à l'extrémité de l'organe de traction de telle sorte que l'extrémité de cet organe peut être enfilée directement sur ledit crochet et maintenue enfermée dans l'ouverture dudit crochet par ledit organe élastique.

Grâce à la conception du dispositif d'écartement, un montage en aveugle de l'extrémité de l'organe de traction directement enfilé sur le crochet du dispositif est possible de sorte que la conception de l'ensemble est facilitée et l'encombrement de la liaison réduit sans nuire à la fiabilité de l'ensemble.

L'invention a encore pour objet un frein à tambour fonctionnant notamment par inertie, caractérisé en ce que les mâchoires de frein sont écartées au moyen d'un dispositif d'écartement du type précité.

L'invention a encore pour objet un câble de traction pour la commande de l'écartement de mâchoires intérieures d'un frein à tambour, caractérisé en ce que le câble est muni d'une attache en forme de boucle agencée pour coopérer avec un dispositif d'écartement du type précité.

L'invention sera bien comprise à la lecture de la description suivante d'exemples de réalisation, en référence aux dessins annexés dans lesquels :
la figure 1 représente une vue schématique en coupe d'un dispositif d'écartement conforme à l'invention à l'état non monté du câble de traction et
la figure 2 représente une vue schématique en coupe d'un dispositif d'écartement conforme à l'invention dans une position dans laquelle le dispositif d'écartement est sollicité par un câble de traction.

Comme mentionné ci-dessus, le dispositif d'écartement, objet de l'invention, permet l'écartement de mâchoires 1 intérieures d'un frein à tambour fonctionnant notamment par inertie.

Ce dispositif est constitué, de manière en soi connue, d'au moins deux leviers 2, 3 articulés entre eux et sollicités au moment du freinage par un organe de traction qui peut être constitué indifféremment d'un câble ou d'une tige. Dans les exemples ci-après, l'organe de traction sera constitué par un câble 4 de traction. Ces leviers 2, 3 présentent chacun au moins un point P d'appui sur les mâchoires 1 de frein. Ces mâchoires 1 de frein sont quant à elle rappelées en position rapprochée par un ou plusieurs ressort(s) (non représentés).

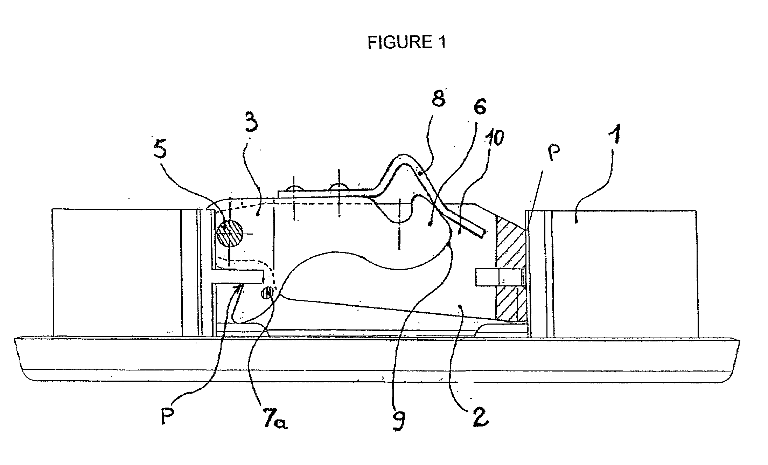

Dans les exemples représentés, les points P d'appui sont constitués par des encoches ménagées respectivement l'une au voisinage de l'axe 5 d'articulation du levier 3, l'autre au voisinage de l'extrémité du levier 2 opposée à celle articulée au levier 3 de telle sorte que, lorsque le levier 3 est entraîné à déplacement en pivotement sous l'action du câble 4 de traction, il écarte la mâchoire positionnée à gauche dans la figure 1 et provoque par réaction, par l'intermédiaire du levier 2, un déplacement de la mâchoire positionnée à droite dans la figure 1.

Le levier 3, sollicité directement par le câble 4 de traction présente, à l'extrémité opposée de son point P d'appui et de son point 5 d'articulation, un crochet 6 ouvert. De manière caractéristique à l'invention, l'ouverture du crochet 6 est munie d'un organe élastique 8, tel qu'une lame ressort, solidaire du levier 3. Cet organe élastique 8 est conformé pour fermer l'ouverture du crochet 6 et s'étendre au-delà de l'extrémité libre du crochet 6 pour former avec la paroi 9 extérieure du crochet 6 un guide 10 d'entrée pour une attache 11 en forme de boucle, disposée à l'extrémité du câble 4 de traction. Ainsi, l'attache 11 de ce câble 4 peut être enfilée directement sur le crochet 6 et maintenue enfermée dans l'ouverture du crochet 6 par l'organe élastique 8. En effet, lors de l'introduction manuelle de l'attache 11 du câble 4 à travers une ouverture ménagée dans le flasque de frein à tambour, cette attache 11 vient se loger naturellement dans le guide 10 d'entrée et provoque, sous l'effet d'une poussée exercée par l'opérateur sur cette attache 11, un écartement de l'organe 8 élastique du crochet 6 pour ménager un passage d'insertion de l'attache 11 du câble 4.

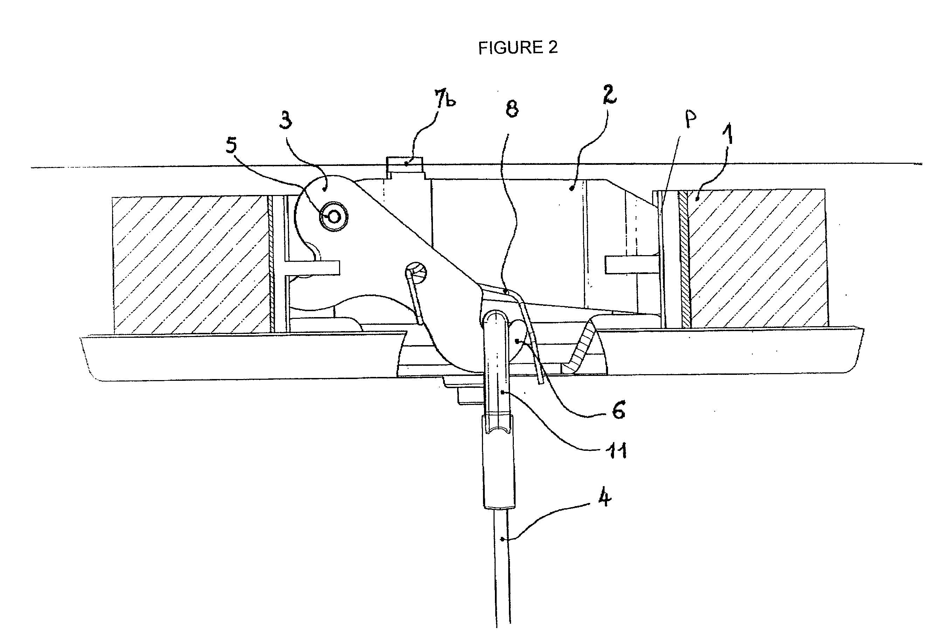

Cette attache 11 du câble 4 en forme de boucle peut affecter un grand nombre de formes. Dans les exemples représentés, cette attache, relativement rigide, est de forme sensiblement rectangulaire. La boucle ainsi constituée peut être une boucle ouverte ou fermée. L'organe élastique 8 peut quant à lui être constitué par une lame-ressort ou un fil ressort, comme l'illustrent les figures. Cette lame-ressort est rendue solidaire du levier 3 directement sollicité par le câble 4 de traction par l'intermédiaire d'organes de fixation quelconques. Dans l'exemple représenté à la figure 1, ces organes de fixation sont constitués par des rivets constituant des équivalents de vis ou de clous. Dans l'exemple représenté à la figure 2, cet organe élastique 8 est inséré à force dans un logement ménagé à cet effet dans le levier 3.

Pour permettre un fonctionnement optimum de l'organe 8 élastique du type décrit ci-dessus, le levier 3 à crochet, sollicité directement par le câble 4 de traction, est limité angulairement en déplacement dans le sens d'un relâchement du câble de traction par une butée 7a, 7b. Dans l'exemple représenté à la figure 2, cette butée 7b est portée par l'autre levier 2, à savoir le levier sollicité indirectement par le câble 4 de traction. Dans l'exemple représenté à la figure 1, la butée 7a est portée par le levier 3 et s'appuie en position de fin de course du levier 3 contre le levier 2. La butée aurait pu, de manière analogue, être disposée directement sur le câble ou sur les mâchoires. Ainsi, lorsque l'attache 11 du câble 4 de traction est amenée en butée contre l'organe 8 élastique, elle tend immédiatement, par une poussée supplémentaire, à provoquer l'écartement de l'organe élastique 8 de la paroi 9 du crochet 6 de manière à générer un passage d'insertion de l'attache 11 du câble 4 qui s'enfile sur le crochet 6 du levier 3. La butée 7a ou 7b peut également servir, en position relâchée du câble de traction, à empêcher un déplacement angulaire en pivotement du levier 3 sous l'action des ressorts assurant le maintien à l'état rapproché des mâchoires 1 de frein.

Dans les exemples représentés, le levier 2, sollicité indirectement par le câble 4 de traction, est un levier à deux branches parallèles entre lesquelles pivote le levier 3 directement sollicité par le câble 4 de traction. La deuxième branche du levier 2 n'a pas été représentée dans les figures pour ne pas masquer le levier 3 directement sollicité par le câble 4 de traction. Les branches du levier 2 peuvent être reliées entre elles, notamment par un axe constituant l'axe d'articulation du levier 3. Le levier 3 peut être simplement enfilé sur l'axe d'articulation sans avoir à utiliser d'organes d'immobilisation complémentaires puisqu'il est par ailleurs maintenu entre les deux branches du levier 2. Il est à noter que le levier 2 aurait pu, de manière analogue, être réalisé sous forme d'une simple plaque sur laquelle le levier 3 serait monté à pivotement. Le levier 3 est quant à lui constitué d'une seule branche.

Un tel dispositif d'écartement peut être utilisé sur tout type de frein à tambour fonctionnant notamment par inertie. De même, ce dispositif peut coopérer avec tout câble de traction de commande de l'écartement de mâchoires dans lequel le câble est muni d'une attache 11 en forme de boucle.

## Revendications

1. Dispositif d'écartement des mâchoires (1) intérieures d'un frein à tambour fonctionnant notamment par inertie, du type constitué d'au moins deux leviers (2, 3) articulés entre eux et sollicités au moment du freinage par un organe de traction, tel qu'un câble (4) ou une tige de traction, lesdits leviers (2, 3) présentant chacun au moins un point (P) d'appui sur les mâchoires (1) de frein rappelées en position rapprochée par ressort(s), l'un (3) des leviers (2, 3) présentant, à l'extrémité opposée de son point (P) d'appui et de son point (5) d'articulation, un crochet (6) ouvert,
**caractérisé en ce que** l'ouverture du crochet (6) est munie d'un organe élastique (8), tel qu'une lame ressort, solidaire du levier (3) à crochet, cet organe élastique (8) s'étendant au-delà de l'extrémité libre du crochet (6) pour former avec la paroi (9) extérieure du crochet (6) un guide (10) d'entrée pour une attache (11) en forme de boucle disposée à l'extrémité de l'organe de traction de telle sorte que l'extrémité de cet organe peut être enfilée directement sur ledit crochet (6) et maintenue enfermée dans l'ouverture dudit crochet (6) par ledit organe élastique (8).

2. Dispositif d'écartement de mâchoires selon la revendication 1,
**caractérisé en ce que** le levier (3) à crochet, sollicité directement par l'organe de traction, est limité angulairement en déplacement dans le sens d'un relâchement du câble de traction par une butée (7a, 7b).

3. Dispositif d'écartement de mâchoires selon la revendication 2,
**caractérisé en ce que** la butée (7b) est portée par le levier (2) sollicité indirectement par l'organe de traction.

4. Dispositif d'écartement de mâchoires selon l'une des revendications 1 à 3,
**caractérisé en ce que** le levier (2), sollicité indirectement par l'organe (4) de traction, est un levier à deux branches parallèles entre lesquelles pivote le levier (3) directement sollicité par l'organe (4) de traction.

5. Frein à tambour fonctionnant notamment par inertie,
**caractérisé en ce que** les mâchoires (1) de frein sont écartées au moyen d'un dispositif d'écartement conforme à l'une des revendications 1 à 4.

6. Câble de traction pour la commande de l'écartement de mâchoires (1) intérieures d'un frein à tambour,
**caractérisé en ce que** le câble (4) est muni d'une attache (11) en forme de boucle agencée pour coopérer avec un dispositif d'écartement conforme à l'une des revendications 1 à 4.
